# EUROPEAN PATENT APPLICATION

(11) **EP 1 980 656 A1**
(43) Date of publication of application: **15.10.2008**
(21) Application number: 07707621.4
(22) Date of filing: 29.01.2007
(51) Int. Cl.: D01F 9/127, C01B 31/02, C09D 201/00

(54) **PROCESS FOR PRODUCING FINE CARBON FIBER AGGLOMERATE**

(30) Priority: 31.01.2006 JP 2006021873
(71) Applicant: Mitsui & Co., Ltd., Chiyoda-Ku Tokyo 100-0004 (JP)
(72) Inventor: TSUKADA, Takayuki, Chiyoda-ku, Tokyo 1000004 (JP); SHAN, Jiayi, Chiyoda-ku, Tokyo 1000004 (JP)
(74) Representative: Brykman, Georges
(86) International application number: PCT/JP2007/051390
(87) International publication number: WO 2007/088810

(57) **Abstract**

Disclosed is a method for manufacturing fine carbon fibers' aggregates having a median diameter of not more than 30 µm, which comprises a pulverization step where a composition which includes (a) fine carbon fibers' aggregates having a median diameter of not less than 30 µm and (b) a dispersion medium undergoes acceleration in order to form a turbulent flow and/or collision flow, thereby shearing force and/or impacting force exert on the (a) component included in the composition and thus the (a) component is pulverized, wherein the value of [I_{D}/I_{G} of fine carbon fibers' aggregates after pulverization of the (a) component] / [I_{D}/I_{G} of fine carbon fibers' aggregate before pulverization of the (a) component] (wherein the I_{D}/I_{G} is calculated from measurement values determined by Raman spectroscopic analysis using 514 nm light of the argon laser) is in the range of 0.7 to 1.5. According to this method, it is possible to obtain fine carbon fibers' aggregates which possess a good electrical conductivity and repress agglomeration.

## Description

This invention relates to a method for manufacturing fine carbon fibers' aggregates which are useful as additives suitable for improvement in physical properties, such as electrical and thermal properties, of coating material or the like, and also relates to a coating material including the fine carbon fibers' aggregates manufactured by the above mentioned method.

### BACKGROUND ART

As the method for manufacturing fine carbon fibers, vapor deposition method, thermally decomposing hydrocarbon such as benzene, toluene, or, xylene as a carbon source in vapor phase is known. For instance, there are substrate method where metal minute particles are sprayed onto a substrate which is placed at a thermal decomposition temperature zone and the fine carbon fibers are grown from the substrate; and flotation method where the fine carbon fibers are grown by using as catalyst floating metal minute particles. The fine carbon fibers obtained by such a vapor deposition method are expected as additives capable of improving properties of matrix material such as organic materials, inorganic materials and metallic materials or providing a new functionality to the matrix material.

The fine carbon fibers obtained by the vapor deposition method, however, have a very large aspect ratio, and the van der Waals forces act between the fine carbon fibers. Therefore, such fine carbon fibers are produced as their aggregate state where the carbon fibers are mutually entangled closely (See, Patent Literatures 1 and 2).

For instance, the fine carbon fibers obtained by the substrate method show particulate aggregate state where the carbon fibers are mutually entangled. As for the fine carbon fibers obtained by the flotation method, the entanglement is also caused unavoidably. When the fine carbon fibers in the aggregate state are used as-is, the fine carbon fibers would be poorly dispersed in a matrix such as resin. Accordingly, various procedures for finely - dividing the fine carbon fibers in the aggregate state has been practiced.

As the finely - dividing procedure heretofore practiced, for instance, a procedure of pulverizing the aggregates by a vibrating ball-mill as shown in the Patent Literature 1, a procedure of pulverizing the aggregates by a jet-mill as shown in the Patent Literature 2, procedures of pulverizing mechanically the aggregates by a ball - mill, a rotor speed mill, a cutting - mill, a homogenizer, vibrating mill, or an attritor, as shown in the Patent Literature 3; and a procedure of cutting the aggregates by applying a high impact force generated by an treating apparatus of giving impact force in high speed gas flow, as shown in the Patent Literature 4; are enumerated.

However, there are various problems in such prior procedures where the fine carbon fibers in the aggregate state undergo pulverization in order to be finely - divided. For instance, in the case of the ball - mill type grinding machine which is classifiedas the crushing, since the finely- dividing is progressed as a result of crushing and destruction of the fine carbon fibers by the rigid balls used as grinding media, the structural defects of the fine carbon fibers in themselves are created, and thus, the physical properties, such as electrical conductivity, of the fine carbon fibers obtained becomes low. Further, when as thegrindingmedia ceramic balls or the like are used, undesired ceramic powder is provided during the pulverization, and the obtained finely - divided carbon fibers are contaminated by the ceramic powder as impurities.

In the case of using a jet - mill, air layer existing around the surface of the fine carbon fibers buffers impact forces on mutual collisions among the fine carbon fibers or impact forces on the collisions of the fine carbon fibers to walls or moving bodies, and thus the pulverization efficiency becomes low.

| | |
|---|---|
| [Patent Literature 1] | JP HEI 3-74465 A |
| [Patent Literature 2] | JP SHO 63-21208 A |
| [Patent Literature 3] | JP SHO 64-65144 A |
| [Patent Literature 4] | JP HEI 4-222227 A |

### DISCLOSURE OF THE INVENTION

### PROBLEMS TO BE SOLVED BY THIS INVENTION

This invention aims to provide method for manufacturing fine carbon fibers' aggregates which show good electrical, thermal and mechanical properties and have a circle-equivalent median diameter (hereinafter, it is expressed simply as "median diameter".) of not more than 30 µm. Further, this invention aims to provide a coating material which includes the fine carbon fibers' aggregates thus obtained.

### MEANS FOR SOLVING THE PROBLEMS

The present invention provides a method for manufacturing fine carbon fibers' aggregates having a median diameter of not more than 30 µm, which comprises a pulverization step (hereinafter, it is expressed as "pulverization step of the present invention") where a composition which comprises (a) fine carbon fibers' aggregates having a median diameter of not less than 30 µm and (b) a dispersion medium for the aggregates undergoes acceleration in order to form a turbulent flow and/or collision flow, thereby shearing force and/or impacting force exert on the (a) component included in the composition and thus the (a) component is pulverized, wherein the value of [I_{D}/I_{G} of fine carbon fibers' aggregates after pulverization of the (a) component] / [I_{D}/I_{G} of fine carbon fibers' aggregates before pulverization of the (a) component] (wherein the I_{D/}I_{G} is calculated from measurement values determined by Raman spectroscopic analysis using 514 nm light of the argon laser) is in the range of 0.7 to 1.5.

Further, the present invention provides a coating material which comprises the fine carbon fibers' aggregates obtained by the above mentioned manufacturing method and an organic binder.

Incidentally,the words"fine carbon fibers' aggregates" used herein denote aggregates of carbon fibers each having an outer diameter of not more than 500 nm. The words "fine carbon fibers' aggregates having a median diameter of not less than 30 µm" denotes, for instance, fine carbon fibers' aggregates which are obtained after synthesis of fine carbon fibers' aggregates, preferably, fine carbon fibers' aggregates which are obtained by subjecting the synthesized fine carbon fibers' aggregates to air milling so as to regulate the length of fine carbon fibers' aggregates to a desired length and each of which has a median diameter of not less than 30 µm. Although it is not particularly limited, the fine carbon fibers' aggregates having a median diameter of not less than 30 µm preferably have the median diameter of 30 - 200 µm, and more preferably have the median diameter of 30 - 100 µm.
The median diameter used herein is the value which is determined by measuring the respective area within a contour of each individual fine carbon fibers' aggregates using a image analysis instrument (for instance, FPIA3000 manufactured by Sysmex corporation), and calculating the circle-equivalent mean diameter of each individual fine carbon fibers' aggregates, and then calculating the median diameter with reference to numbers.

### EFFECTS OF THE INVENTION

According to the present invention, it is possible to obtain pulverized aggregates of fine carbon fibers without deteriorating extremely the typical physical properties, such as electrical conductivity, of the aggregates of fine carbon fibers. Further, when the fine carbon fibers' aggregates obtained by the manufacturing method according to the present invention is used as a component of a electrically conductive coating material, it is possible to obtain an electrically conductive film having a good appearance because it can find no agglomerate attributable to the fine carbon fibers' aggregates in the coating film.

### BRIEF DESCRIPTION OF THE DRAWINGS

[Fig. 1] is a SEM photo of an intermediate for the carbon fibrous structure obtained in Synthesis Example 1.
[Fig. 2] is a TEM photo of an intermediate for the carbon fibrous structure for the carbon fibrous structure obtained in Synthesis Example 1.
[Fig. 3] is a SEM photo of a carbon fibrous structure obtained in Synthesis Example 1.
[Fig. 4A] and [Fig. 4B] are TEM photos of a carbon fibrous structure obtained in Synthesis Example 1.
[Fig. 5] is schematic diagram illustrating the principle of a pulverization apparatus used in a preferable embodiment of the present invention.
[Fig. 6] is a schematic diagram illustrating the principle of another pulverization apparatus used in another preferable embodiment of the present invention.

### EXPLANATION OF NUMERALS

- 1: Rotor
- 2: Stator
- 3: Gap
- 4: Nozzle
- 5: Central part of Chamber

### BEST MODE FOR CARRYING OUT THE INVENTION

Now, the present invention will be described in detail with reference to some embodiments.

In the present invention, as a method for accelerating a composition which comprises (a) fine carbon fibers' aggregates having a median diameter of not less than 30 µm and (b) a dispersion medium for the aggregates in order to form a turbulent flow and/or collision flow, thereby shearing force and/or impacting force exert on the (a) component included in the composition, preferably, without aid of mutual collisions and/or friction among the grinding media (25 °C, liquid), following methods are preferably enumerated.

### [Pulverization Method 1]

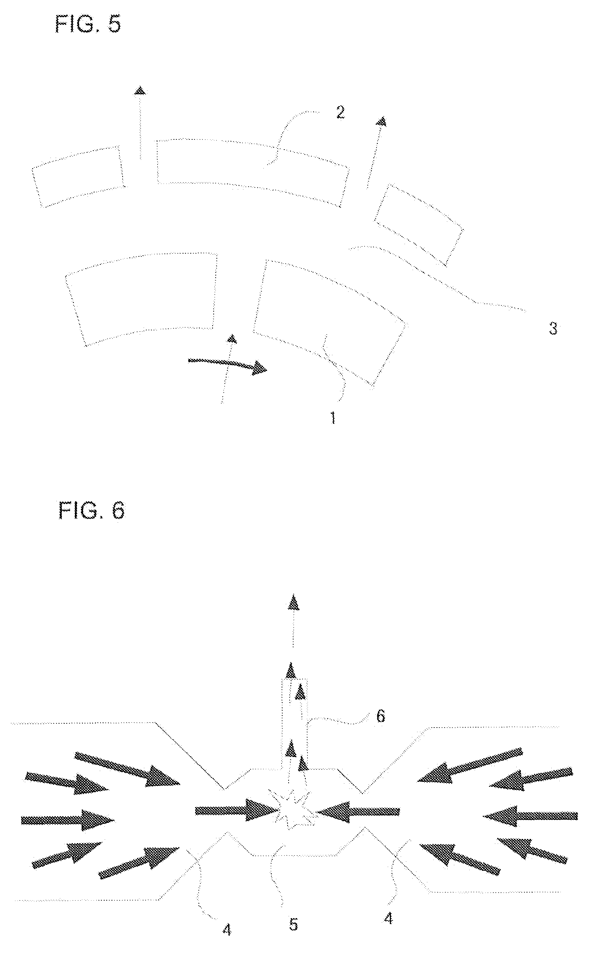

As one embodiment of the pulverization method according to the present invention, a method where the shearing force and/or impacting force exert on the mixture of (a) component and (b) component by penetrating the mixture of (a) component and (b) component through the gaps between a rotating rotor and fixed stators can be enumerated.
In such a method, for instance, as shown in Fig. 5, high shearing force and turbulent flow can be given at gaps 3 between a rotor 1 and fixed stators 2 due to the rotating number differentials between the rotor 1 which rotates with a relatively high speed and stators 2. Thereby, fluid (composition including (a) component and (b) component) passed through the gaps can be pulverized. The (a) component is pulverized into particles having a median diameter of not less than 30 µm, preferably, not less than 20 µm, and more preferably, not less than 10 µm.

According to this pulverization method, since there is a little or substantially no damage of the fine carbon fibers' aggregates on the pulverization, it is possible to obtain fine carbon fibers' aggregates having a [I_{D}/I_{G} of fine carbon fibers' aggregates after pulverization of the (a) component] / [I_{D}/I_{G} of fine carbon fibers' aggregates before pulverization of the (a) component] value of 0.7 - 1.5, preferably, 0.8 - 1.4 and more preferably 0.9 - 1.3, and wherein the (a) component is pulverized.

As the apparatus which can perform such a method, rotor - stator type high shearing inline mixers can be exemplified, and concretely, for instance, CAVITRON (trade name, manufactured by EUROTEC, Ltd.), MAGNETRON (manufactured by KINEMATIKA AG), YTRON-Z (manufactured by YTRON), INLINE MIXER DR (manufactured by IKA), INLINE MIXER DRS (manufactured by IKA), INLINE MIXER (manufactured by SILVERSN), etc., are enumerated.

In such a method, as the dispersion medium which is used as the (b) component, and which is for the fine carbon fibers' aggregates having a median diameter of not more than 30 µm, there is no particular limitation except that it is stable to the fine carbon fibers' aggregates and shows a liquid state at a temperature of pulverization treatment, for instance at 25 °C. For example, alcohols (involving polyalcohols), ethers, ketones, esters, aromatic solvents, hydrocarbon solvents, and water, and any mixtures thereof, are usable. Among them, those which can exhibit a good dispersing property to the fine carbon fibers' aggregate, and can be easily removed by volatilization, rinsing, etc., after the pulverization treatment are preferable, thus, readily volatile aqueous media such as monovalent alcohols having a carbon number of 1 - 5, are preferable. Among them, ethanol and isopropanol are particularly preferable.

Into the composition which includes the (a) component and the (b) component, if necessary, a dispersing agent for the (a) component can be added preferably. As such a dispersing agent, for instance, ethylene oxide - propylene oxide block copolymer can be used.

In the composition to be treated by the pulverization method 1, it is preferable that the containing amount of the (a) component is 0.1 - 10 % by weight, more desirably, 0.1 - 5 % by weight, from the viewpoint of the production of the fine carbon fibers' aggregates and the pulverization efficiency. Further, as the viscosity of the composition to be treated by the pulverization method 1, it is preferable to be about 1 - about 10,000 cps, more desirably, about 1 - about 3,000 cps, from the viewpoint of the pulverization efficiency. Incidentally, with respect to the viscosity mentioned above, at the temperature on the pulverization treatment, the composition may show a viscosity within the above range. In general, however, the viscosity may be that at ordinary temperatures (25 °C ± 5 °C).

In the composition to be treated by the pulverization method 1, it is preferable that the containing amount of the dispersing agent which is optionally added is 0.1 - 10 % by weight.

The peripheral speed of the rotating rotor may be set to be 10 - 50 m/sec., and the gap distance between the rotor and stators may be set to be 30 µm - 0.5 mm, although they are not particularly limited thereto and they depend on the shapes and constitutions of the rotor and the stators in the apparatus used.
Further, the frequency of the opening parts between the rotating rotor and stators in the pulverization method 1 (the number of compression - release cycles of chamber) is desirably to be 1 - 5 MHz.

### [Pulverization Method 2]

As another embodiment of the pulverization method according to the present invention, a method where the flows, both of which are of a composition which includes the (a) component and the (b) component, are made to collide with each other oppositely, can be enumerated. For instance, after pressurizing the composition, the composition is divided into two parts in a chamber, and then they are separately introduced into the opposed nozzles 4, 4 as shown in Fig. 6 in order to accelerate the flows of the parts, and are issued from the respective nozzles 4, 4 so as to collide with each other oppositely at the central part 5 of the chamber, thereby, the (a) component is pulverized, and thereafter the composition is discharged through a lead - out line 6.

The (a) component is pulverized into particles having a median diameter of not less than 30 µm, preferably, not less than 20 µm, and more preferably, not less than 10 µm.

According to this pulverization method, since there is a little or substantially no damage of the fine carbon fibers' aggregates on the pulverization, it is possible to obtain fine carbon fibers' aggregates having a [I_{D}/I_{G} of fine carbon fibers' aggregates after pulverization of the (a) component] / [I_{D}/I_{G} of fine carbon fibers' aggregates before pulverization of the (a) component] value of 0.7 - 1.5, preferably, 0.8 - 1.4 and more preferably 0.9 - 1.3, and wherein the (a) component is pulverized.

As the apparatus which can perform such a method, wet jet mills in which opposed flows are made to collide with each other can be exemplified, and concretely, for instance, ULTIMIZER (trade name, manufactured by SUGINO MACHINE LIMITED), NANOMIZER (trade name, manufactured by yoshida kikai co., ltd), MICROFLUIDIZER (trade name, manufactured by MIZUHO Industrial CO, .LTD), etc., are enumerated.
As for the dispersion medium which is used as the (b) component, and which is for the fine carbon fibers' aggregates having a median diameter of not more than 30 µm; the dispersing agent; the containing amounts of the respective components in the composition to be treated by the pulverization method 2; and the viscosity of the composition to be treated by the pulverization method 2, the same kinds and conditions as mentioned above with respect to the pulverization method 1 can be enumerated and used.

Further, the pressure at the nozzles 4, 4 in the wet jet mill is, for instance, to be 50 - 250 MPa, and the flow rate of the composition which includes the (a) component and the (b) component is set to be about 300 m/sec. - about 900 m/sec. in order to operate the mill.

### [Materials being preferable as the (a) component]

As far as aggregates are those of carbon fibers each having outer diameter of not more than 500 nm, the aggregates can be used as the (a) component for the manufacturing method according to the present invention. However, in order to give adequate electrical, mechanical and thermal properties even in a small adding amount to the matrix such as resin, it is desirable to adapt carbon fibers having a diameter as small as possible; further it is desirable that the aggregates are those of carbon fiber structures each of which make an sparse structure of the carbon fibers where the fibers are mutually combined tightly so that the fibers do not behave individually and which sustains their sparse state in the resin matrix; and more, it is desirable that the aggregates are those of the carbon fiber structures wherein the carbon fibers per se are ones which are designed to have a minimum amount of defects.

Namely, as the fine carbon fibers' aggregates to be used for the pulverization method 1 or the pulverization method 2 of the present invention, aggregates of carbon fibrous structures, each of carbon fibrous structures comprising a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers, are desirable.

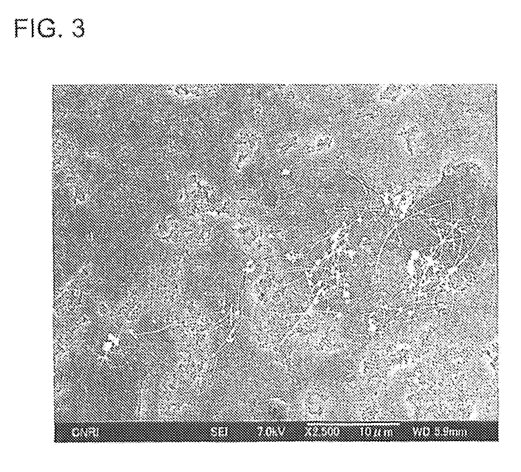

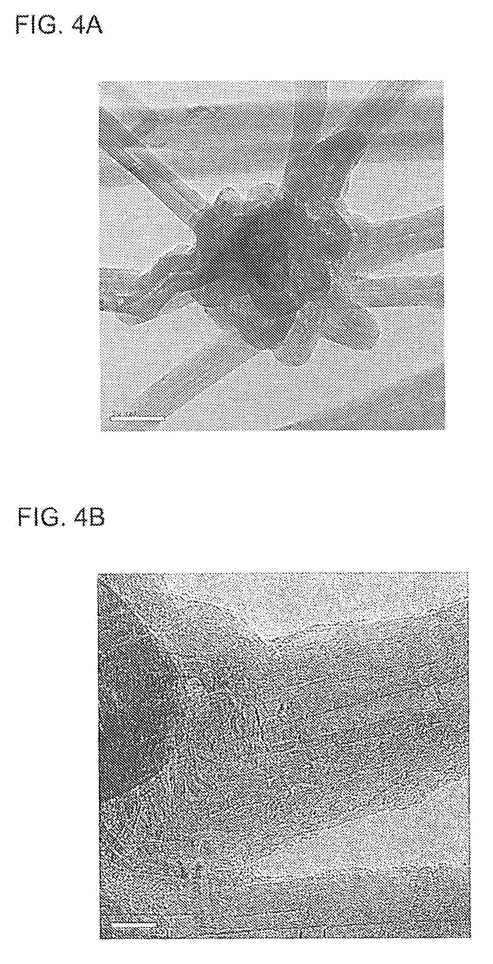

Such a carbon fibrous structure is, as shown in SEM photo of Fig. 3 and TEM photos of Fig. 4A and 4B, composed of a thee-dimensionally network of carbon fibers each having an outside diameter of 15 - 100 nm, and a granular part with which the carbon fibers are bound together so that the concerned carbon fibers elongate outwardly from the granular part.

The reason why the outside diameter of the carbon fibers which constitutes the carbon fibrous structure is desirable to be in a range of 15 nm to 100 nm is as follows. When the outside diameter is in this range and the carbon fibers having such an outside diameter are used as a modifier or additive to the matrix such as resin, an enhanced electric conductivity can be obtained. Carbon fibers that have a diameter within the above range and whose tubular graphene sheets are layered one by one in the direction that is orthogonal to the fiber axis, i.e., being of a multilayer type, can enjoy a high flexural rigidity and ample elasticity. In other words, such fibers would have a property of being easy to restore their original shape after undergoing any deformation. Therefore, even if the carbon fibrous structures have been compressed prior to being mixed into the matrix such as resin, they tend to take a sparse structure in the matrix.

Incidentally, when annealing at a temperature of not less than 2400°C, the spacing between the layered graphene sheets becomes lesser and the true density of the carbon fiber is increased from 1.89 g/cm³ to 2.1 g/cm³, and the cross sections of the carbon fiber perpendicular to the axis of carbon fiber come to show polygonal figures. As a result, the carbon fibers having such constitution become denser and have fewer defects in both the stacking direction and the surface direction of the graphene sheets that make up the carbon fiber, and thus their flexural rigidity (EI) can be enhanced.

Additionally, it is preferable that the outside diameter of the fine carbon fiber undergoes a change along the axial direction of the fiber. In the case that the outside diameter of the carbon fiber is not constant, but changed along the axial direction of the fiber, it would be expected that some anchor effect may be provided to the carbon fiber in the matrix such as resin, and thus the migration of the carbon fiber in the matrix can be restrained, leading to improved dispersion stability.

Then, in the carbon fibrous structure as mentioned above, fine carbon fibers having a predetermined outside diameter and being configured three dimensionally are bound together by a granular part produced in a growth process of the carbon fibers so that the carbon fibers are elongated outwardly from the granular part. Since multiple carbon fibers are not only entangled each other, but tightly bound together in the granular part, the carbon fibers will not disperse as single fibers, but will be dispersed as intact bulky carbon fibrous structures when added to the matrix such as resin. Since the fine carbon fibers are bound together by a granular part produced in the growth process of the carbon fibers in the carbon fibrous structure, the carbon fibrous structure itself can enjoy superior properties such as electric property. For instance, when determining electrical resistance under a certain pressed density, the carbon fibrous structures show an extremely low resistivity, as compared with that of a simple entangled body of the fine carbon fibers and that of the carbon fibrous structures in which the fine carbon fibers are fixed at the contacting points with a carbonaceous material or carbonized substance therefrom after the synthesis of the carbon fibers. Thus, when the carbon fibrous structures added and distributed in the matrix, they can form good conductive paths within the matrix.

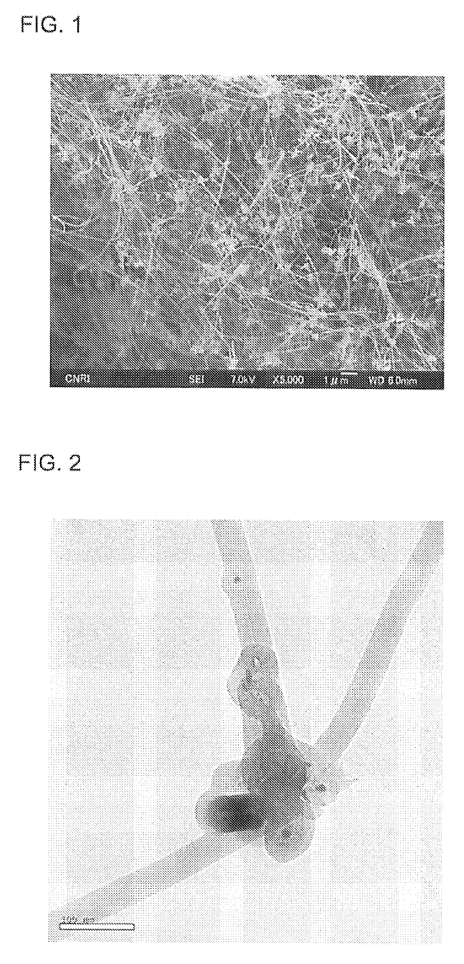

Furthermore, it is preferable that the diameter of the granular part is larger than the outside diameter of the carbon fibers as shown in Fig.2, although it is not specifically limited thereto. When the granular part, which is the binding site of the carbon fibers, has a much larger particle diameter than the outer diameter of the carbon fibers, the carbon fibers that are elongated outwardly from the granular part have stronger binding force, and thus, even when the carbon fibrous structures are exposed to a relatively high shear stress during combining with a matrix such as resin, they can be dispersed as maintaining its three-dimensional carbon fibrous structures into the matrix. The "particle diameter of the granular part" used herein is the value which is measured by assuming that the granular part, which is the binding site for the mutual carbon fibers, is one spherical particle.

Furthermore, the carbon fibrous structure in the fine carbon fibers' aggregate to be used as the (a) component may exhibit a bulky, loose form in which the carbon fibers are sparsely dispersed, because the carbon fibrous structure is comprised of carbon fibers that are configured as a three dimensional network and are bound together by a granular part so that the carbon fibers are elongated outwardly from the granular part as mentioned above. Concretely, it is desirable that the bulk density of the (a) component is in the range of 0.0001 - 0.05 g/cm³, more preferably, 0.001 - 0.02 g/cm³. When the bulk density is not more than 0.05 g/cm³, it would become possible to improve the physical properties of the matrix such as resin with a small dosage, and thus it is preferable.

Furthermore, the carbon fibrous structure in the fine carbon fibers' aggregate to be used as the (a) component can enjoy good electric properties in itself, since the carbon fibers configured as a three dimensional network in the structure are bound together by a granular part produced in the growth process of the carbon fibers as mentioned above. For instance, it is desirable that a carbon fibrous structure has a powder electric resistance determined under a certain pressed density, 0.8 g/cm³, of not more than 0.02 Ω • cm, more preferably, 0.001 to 0.010 Ω • cm. When the particle's resistance is not more than 0.02 Ω • cm, it may become possible to form good electrically conductive paths when the structures are added to a matrix such as a resin, and thus it is preferable.

Furthermore, it is desirable that the oxidation temperature of the (a) component is not less than 750 °C. Such a high thermal stability would be brought about by the above mentioned facts that the carbon fibrous structure has little defects and that the carbon fibers have a predetermined outside diameter.

Further, in order to enhance the strength and electric conductivity of the fine carbon fibers' aggregates used as the (a) component, it is desirable that the graphene sheets that make up the carbon fibers have a small number of defects, and more specifically, for example, the I_{D}/I_{G} ratio of the carbon fiber determined by Raman spectroscopy is not more than 0.2, more preferably, not more than 0.1. Incidentally, in Raman spectroscopic analysis, with respect to a large single crystal graphite, only the peak (G band) at 1580 cm⁻¹ appears. When the crystals are of finite ultrafine sizes or have any lattice defects, the peak (D band) at 1360 cm⁻¹ can appear. Therefore, when the intensity ratio (R=I₁₃₆₀/I₁₅₈₀=I_{D}/I_{G}) of the D band and the G band is below the selected range as mentioned above, it is possible to say that there is little defect in graphene sheets.

The fine carbon fibers' aggregates (the (a) component) which are aggregates of carbon fibrous structure having the above described, desirable configuration may be prepared as follows, although it is not limited thereto.

Basically, an organic compound such as a hydrocarbon is chemical thermally decomposed through the CVD process in the presence of ultrafine particles of a transition metal as a catalyst in order to obtain carbon fibers' aggregates (hereinafter referred to as an "intermediate"), and then the intermediate thus obtained undergoes a high temperature heating treatment (annealing treatment).

As a raw material organic compound, hydrocarbons such as benzene, toluene, xylene; carbon monoxide (CO); and alcohols such as ethanol may be used. It is preferable, but not limited, to use as carbon sources at least two carbon compounds which have different decomposition temperatures for the purpose of obtaining the fine carbon fibers' aggregates according to the present invention. Incidentally, the words "at least two carbon compounds" used herein not only include two or more kinds of raw materials, but also include one kind of raw material that can undergo a reaction, such as hydrodealkylation of toluene or xylene, during the course of synthesis of the fibrous structure such that in the subsequent thermal decomposition procedure it can function as at least two kinds of carbon compounds having different decomposition temperatures.
Inert gases such as argon, helium, xenon; and hydrogen may be used as an atmosphere gas.

A mixture of transition metal such as iron, cobalt, molybdenum, or transition metal compounds such as ferrocene, metal acetate; and sulfur or a sulfur compound such as thiophene, ferric sulfide; may be used as a catalyst.

The intermediate may be synthesized using a CVD process with hydrocarbon or etc., which has been conventionally used in the art. The steps may comprise gasifying a mixture of hydrocarbon and a catalyst as a raw material, supplying the gasified mixture into a reaction furnace along with a carrier gas such as hydrogen gas, etc., and undergoing thermal decomposition at a temperature in the range of 800 °C-1300 °C. By following such synthesis procedures, the product obtained are aggregates, each of which is of several to several tens of centimeters in size and which is composed of plural carbon fibrous structures (first intermediates), each of which has a three dimensional configuration where fibers having 15 - 100 nm in outside diameter are bound together by a granular part that has grown around the catalyst particle as the nucleus.

The thermal decomposition reaction of the hydrocarbon raw material mainly occurs on the surface of the catalyst particles or on growing surface of granular parts that have grown around the catalyst particles as the nucleus, and the fibrous growth of carbon may be achieved when the recrystallization of the carbons generated by the decomposition progresses in a constant direction. When obtaining aggregates of carbon fibrous structures according to the present invention, however, the balance between the thermal decomposition rate and the carbon fiber growth rate is intentionally varied. Namely, for instance, as mentioned above, to use as carbon sources at least two kinds of carbon compounds having different decomposition temperatures may allow the carbonaceous material to grow three dimensionally around the granular part as a centre, rather than in one dimensional direction. The three dimensional growth of the carbon fibers depends not only on the balance between the thermal decomposition rate and the growing rate, but also on the selectivity of the crystal face of the catalyst particle, residence time in the reaction furnace, temperature distribution in the furnace, etc. The balance between the decomposition rate and the growing rate is affected not only by the kinds of carbon sources mentioned above, but also by reaction temperatures, and gas temperatures, etc. Generally, when the growing rate is faster than the decomposition rate, the carbon material tends to grow into fibers, whereas when the thermal decomposition rate is faster than the growing rate, the carbon material tends to grow in peripheral directions of the catalyst particle. Accordingly, by changing the balance between the thermal decomposition rate and the growing rate intentionally, it is possible to control the growth of carbon material to occur in multi-direction rather than in single direction, and to produce three dimensional structures that are related to the present invention. In order to form the above mentioned three-dimensional configuration, where the fibers are bound together by a granular part, with ease, it is desirable to optimize the compositions such as the catalyst used, the residence time in the reaction furnace, the reaction temperature and the gas temperature.

The first intermediate, obtained by heating the mixture of the catalyst and hydrocarbon at a constant temperature in the range of 800 °C - 1300°C, has a structure that resembles sheets of carbon atoms laminated together, (and being still in a half-raw, or incomplete condition) . When analyzed with Raman spectroscopy, the D band of the intermediate is very large and many defects are observed. Further, the obtained first intermediate is associated with unreacted raw materials, nonfibrous carbon, tar moiety, and catalyst metal.

Therefore, the first intermediate is subjected to a high temperature heat treatment at 2400 - 3000 °C using a proper method in order to remove such residues from the intermediate and to produce the intended fine carbon fibers' aggregates with few defects.

For instance, the first intermediate may be heated at 800 - 1200 °C to remove the unreacted raw material and volatile flux such as the tar moiety so as to obtain a second intermediate, and thereafter the second intermediate is annealed at a high temperature of 2400 - 3000 °C to produce the intended structure and, concurrently, to vaporize the catalyst metal, which is included in the fibers, to remove it from the fibers. In this process, it is possible to add a small amount of a reducing gas and carbon monoxide into the inert gas atmosphere to protect the carbon structures.

By annealing the second intermediate at a temperature of 2400 - 3000 °C, the patch-like sheets of carbon atoms are rearranged to associate mutually and then form multiple graphene sheet-like layers (hereinafter, the product thus obtained is expressed as "annealed product".

Incidentally, as the (a) component which undergoes the pulverization step, represented by the pulverization method 1 and the pulverization method 2 as described above, either the first intermediate or the second intermediate may be used. Alternatively, the annealed product may be also used as the (a) component.
In general, those after receiving air milling are used as the (a) component.

Incidentally, the respective physical properties in the present invention are measured by the following protocols.

### <Measurement of Bulk density>

1 g of powder was placed into a 70 mm caliber transparent cylinder equipped with a distribution plate, then air supply at 0.1 Mpa of pressure, and 1.3 liter in capacity was applied from the lower side of the distribution plate in order to blow off the powder and thereafter allowed the powder to settle naturally. After the fifth air blowing, the height of the settled powder layer was measured. Any 6 points were adopted as the measuring points, and the average of the 6 points was calculated in order to determine the bulk density.

### <Circle-equivalent median diameter>

Carbon fibers' aggregates were suspended into isopropyl alcohol. The obtained suspension was applied to FPIA3000 (manufactured by Sysmex corporation; a flow particle image analyzer). By using the analysis software annexed to the analyzer, area within each individual contour of particle was measured, and, the measured area was converted into circle-equivalent diameter, and then, the number - based median diameter was calculated.

### <Raman spectroscopic analysis>

The Raman spectroscopic analysis was performed with the equipment LabRam 800 manufactured by HORIBA JOBIN YVON, S.A.S., and using 514 nm of argon laser.

### <Oxidation temperature>

Combustion behavior was determined using TG-DTA manufactured by MAC SCIENCE CO. LTD., at air flow rate of 0.1 liter/minute and heating rate of 10 °C/minute. The temperature at the top position of the exothermic peak in DTA was determined as the oxidation temperature.

### [Coating material]

The coating material according to the present invention comprises the disintegrated or pulverized fine carbon fibers' aggregates obtained by the above mentioned manufacturing method and the organic binder component. As the organic binder component to be used in the present invention, one or more of various organic binder (s) of being in either solid or liquid at ordinary temperatures (25 °C ± 5 °C) are usable depending upon the usage of the conductive coating material, etc.

Concretely, for example, various organic binders used normally in the solvent type paints and the oil printing ink such as acrylic resins; alkyd resins; polyester resins; polyurethane resins; epoxy resins; phenolic resins; melamine resins; amino resins; vinyl chloride resins; silicone resins; rosin type resins such as gum rosin, lime rosin, etc.; maleic resins; polyamide resins; nitrocellulose, ethylene - vinyl acetate copolymer; rosin modified resins such as rosin modified phenolic resin, rosin modified maleic resin, etc; and petroleum resins, etc., are usable. Alternatively, various aqueous binders used for aqueous type paints and aqueous inks such as water-soluble acrylic resins, water-soluble styrene - maleic acid resins, water-soluble alkyd resins, water-soluble melamine resins, water-soluble urethane emulsion resins, water-soluble epoxy resins, and water-soluble polyester resins, etc., are usable.

In addition to the above mentioned organic binder component and the fine carbon fibers' aggregates, the coating material according to the present invention may contain various known additives such as solvents, oils and fats, defoaming agents, coloring agents involving dyes, pigments and extender pigments, drying accelerators, surfactants, hardening accelerators, auxiliaries, plasticizers, lubricants, antioxidants, ultraviolet rays absorbents, various stabilizers, etc., optionally.

As the solvent, various solvents used normally in the solvent type paints and printing inks such as soybean oil; toluene, xylene, thinners; butyl acetate, methyl acetate; methyl isobutyl ketone; glycol ether type solvents such as methyl cellosolve, ethyl cellosolve, propyl cellosolve, butyl cellosolve, propylene glycol monomethyl ether; ester type solvents such as ethyl acetate, butyl acetate, amyl acetate; aliphatic hydrocarbon type solvents such as hexane, heptane, octane; alicyclic hydrocarbon type solvents such as cyclohexane; petroleum type solvent such as mineral spirit; ketone type solvents such as acetone, methyl ethyl ketone; alcohol type solvents such as methyl alcohol, ethyl alcohol, propyl alcohols, butyl alcohols; and aliphatic hydrocarbons, etc., are usable.

Alternatively, as solvent for aqueous type paint, mixtures of water and aqueous organic solvent(s) which are normally used for aqueous paint or ink are usable. The aqueous organic solvent involves, for instance, alcohol type solvents such as ethyl alcohol, propyl alcohols, butyl alcohols; glycol ether type solvents such as methyl cellosolve, ethyl cellosolve, propyl cellosolve, butyl cellosolve; oxyethylene or oxypropylene addition polymer such as diethylene glycol, triethylene glycol, polyethylene glycol, dipropylene glycol, tripropylene glycol, polyethylene glycol; alkylene glycols such as ethylene glycol, propylene glycol, 1,2,6-hexane triol; glycerin; 2-pyrrolidone; etc.

As oils and fats, boiled oils prepared by modifying drying oil such as linseed oil, tung oil, oiticica oil, safflower oil, etc., are usable.

As for the defoaming agent, coloring agent, drying accelerator, surfactant, hardening accelerator, auxiliary, plasticizer, lubricant, antioxidant, ultraviolet rays absorbent, and various stabilizers, various known compounds conventionally used in the conductive coating material can be used.

The coating material according to the present invention includes the aforementioned fine carbon fibers' aggregates in conjunction with the organic binder component as mentioned above.
Although the amount of the fine carbon fibers' aggregates depends on the usage of the coating material intended and the kind of the organic binder component to be used, but it is in the range of about 0.01 to about 50 % by weight of total weight of the coating material.

As the method for preparing the coating composition according to the present invention, any one of various wet or dry mixing procedures is usable. Further, in order to improve the quality stability of the obtained coating material still higher, it is possible to provide an additional step of removing bulky particles, such as centrifugal separation or filtering.

### EXAMPLES

Hereinafter, this invention will be illustrated in detail by practical examples. However, the invention is not limited to the following examples.

### (Synthesis Example 1)

By the CVD process, aggregates of carbon fibrous structures were synthesized using toluene as the raw material.
The synthesis was carried out in the presence of a mixture of ferrocene and thiophene as the catalyst, and under the reducing atmosphere of hydrogen gas. Toluene and the catalyst were heated to 380 °C along with the hydrogen gas, and then they were supplied to the generation furnace, and underwent thermal decomposition at 1300 °C in order to obtain the aggregates of fine carbon fibrous structures (first intermediate). A sample for electron microscopes was prepared by dispersing the first intermediate into toluene. Figs. 1 and 2 show SEM photo and TEM photo of the sample, respectively.
The first intermediate thus synthesized was baked at 900 °C in nitrogen gas in order to remove tar, etc., and to obtain a second intermediate.

Further, the second intermediate underwent a high temperature heat treatment at 2600 °C. The obtained aggregates of the carbon fibrous structures underwent pulverization using an air mill in order to produce aggregates of carbon fibrous structures (annealed product).
A sample for electron microscopes was prepared by dispersing ultrasonically the obtained aggregates of carbon fibrous structures into toluene. Fig. 3, and Figs. 4A and 4B show SEM photo and TEM photos of the sample, respectively.

### {Example 1)

A composition which includes 1.5 parts by weight of the aggregates of fine carbon fibrous structures obtained by Synthetic Example 1 (annealed product), 0.03 parts by weight of ethylene oxide - propylene block copolymer, and 100 parts by weight of isopropyl alcohol was applied to CAVITRON (trade name, manufactured by EUROTEC, Ltd.) type CD1010 in order to pulverize the aggregates of fine carbon fibrous structures (according to the above mentioned pulverization method 1). Incidentally, the peripheral speed was set to 40 m/sec. (11,200 rpm), the flow rate was set to 20 Kg/min., the distance between the rotor and stators was set to 4 mm, and the number of passing was set to 30.

From the obtained composition, isopropyl alcohol and ethylene oxide - propylene block copolymer were removed in order to obtain aggregates of fine carbon fibrous structures. The physical properties for the obtained aggregates of fine carbon fibrous structure are shown in Table 1. Since the median diameter of the aggregates of Example 1 is small as compared with that of Control 1, it was confirmed that the aggregates of Example 1 were pulverized. Further, since the oxidation temperature and the I_{D}/I_{G} value of Example 1 are analogous to those of Control 1, it was confirmed that the desirable pulverization of the present invention was performed.

### (Example 2)

A composition which includes 1.5 parts by weight of the aggregates of fine carbon fibrous structures obtained by Synthetic Example 1 (annealed product), 0.03 parts by weight of ethylene oxide - propylene block copolymer, and 100 parts by weight of isopropyl alcohol was applied to ULTIMIZER (trade name, manufactured by SUGINO MACHINE LIMITED) type HJP-25080 in order to pulverize the aggregates of fine carbon fibrous structures (according to the above mentioned pulverization method 2). Incidentally, the pressure at nozzles was set to 150 MPa, the flow rate was set to 520 m/sec., and the number of passing was set to 5.

From the obtained composition, isopropyl alcohol was removed in order to obtain aggregates of fine carbon fibrous structures. The physical properties for the obtained aggregates of fine carbon fibrous structure are shown in Table 1. Since the median diameter of the aggregates of Example 2 is small as compared with that of Control 1, it was confirmed that the aggregates of Example 2 were pulverized. Further, since the oxidation temperature and the I_{D}/I_{G} value of Example 2 are analogous to those of Control 1, it was confirmed that the desirable pulverization of the present invention was performed.

The physical properties for the aggregates of fine carbon fibrous structure obtained by synthetic Example 1 (annealed product) are shown in Table 1.

### (Control 2)

A composition which includes 1.5 parts by weight of the aggregates of fine carbon fibrous structures obtained by Synthetic Example 1 (annealed product), 0.03 parts by weight of ethylene oxide - propylene block copolymer, and 100 parts by weight of isopropyl alcohol was applied to ULTRA APEX MILL(trade name, manufactured by KOTOBUKI INDUSTRIES CO., LTD.) (a beads-mill, diameter of beads used: 0.1 mm) in order to pulverize the aggregates of fine carbon fibrous structures. Incidentally, the peripheral speed was set to 10 m/sec. (2940 rpm), and the number of passing was set to 7.

From the obtained composition, isopropyl alcohol was removed in order to obtain aggregates of fine carbon fibrous structures. The physical properties for the obtained aggregates of fine carbon fibrous structure are shown in Table 1. Since the median diameter of the aggregates of Control 2 is small as compared with that of Control 1, it was confirmed that the aggregates of Control 2 were pulverized. However, since the oxidation temperature of Control 2 was decreased as compared with that of Control 1, and the I_{D}/I_{G} value of Control 2 became larger as compared with that of Control 1, it was found that the aggregates of fine carbon fibrous structures were injured by this pulverization method.

### (Control 3)

A composition which includes 1.5 parts by weight of the aggregates of fine carbon fibrous structures obtained by Synthetic Example 1 (annealed product) 0.02 parts by weight of ethylene oxide - propylene block copolymer, and 100 parts by weight of isopropyl alcohol was applied to OB MILL (trade name, manufactured by TURBO KOGYO CO., LTD.) (a beads-mill, diameter of beads used: 0.8 mm) in order to pulverize the aggregates of fine carbon fibrous structures. Incidentally, the peripheral speed was set to 23 m/sec. (2800 rpm), and the number of passing was set to 9. After that, in accordance with a similar fashion with Example 1, aggregates of fine carbon fibrous structures were obtained, and the physical properties for the obtained aggregates of fine carbon fibrous structure are shown in Table 1. Since the median diameter of the aggregates of Control 3 is small as compared with that of Control 1, it was confirmed that the aggregates of Control 3 were pulverized. However, since the oxidation temperature of Control 3 was decreased as compared with that of Control 1, and the I_{D}/I_{G} value of Control 3 became larger as compared with that of Control 1, it was found that the aggregates of fine carbon fibrous structures were injured by this pulverization method.

**[Table 1]**

| | Median diameter (µm) (FPIA3000, Sysmex corp.) | Oxidation Temp. (°C) | I_{D}/I_{G} | (I_{D}/I_{G}) after pulverization / (I_{D}/I_{G}) before pulverization |
|---|---|---|---|---|
| Ex. 1 | 2.8 | 802 | 0.09 | 1.1 |
| Ex. 2 | 2.5 | 801 | 0.08 | 1.0 |
| Ctrl. 1 | 36.9 | 802 | 0.08 | - |
| Ctrl. 2 | 7.5 | 705 | 0.61 | 7.6 |
| Ctrl. 3 | 5.2 | 775 | 0.25 | 3.1 |

### (Example 3)

Coating composition was prepared by blending the aggregates of fine carbon fibrous structures obtained in Example 1, to an epoxy resin (ADEKA RESIN EP4100E, epoxy equivalent: 190, manufactured by Asahi Denka Co., Ltd.) and a hardener (ADEKA HARDENER EH3636-AS, manufactured by Asahi Denka Co. , Ltd.) so that the containing amount of the aggregates of fine carbon fibrous structures became 1% by weight based on the total weight of composition, and then kneading them for ten minutes.

The coating composition thus obtained was developed as a film using a doctor blade with gap of 200 µm. The coated film was then hardened at 170 °C for 30 minutes to obtain hardened film, and the hardened film was visually observed for presence or absence of agglomerate attributable to the aggregates of the fine carbon fibrous structures existing in the film. As a result, substantially no agglomerate attributable to the aggregates of the fine carbon fibrous structures was observed.

### (Example 4)

Coating composition was prepared by blending the aggregates of fine carbon fibrous structures obtained in Example 2, to an epoxy resin (ADEKA RESIN EP4100E, epoxy equivalent: 190, manufactured by Asahi Denka Co., Ltd.) and a hardener (ADEKA HARDENER EH3636-AS, manufactured by Asahi Denka Co., Ltd.) so that the containing amount of the aggregates of fine carbon fibrous structures became 1% by weight based on the total weight of composition, and then kneading them for ten minutes.

The coating composition thus obtained was developed as a film using a doctor blade with gap of 200 µm. The coated film was then hardened at 170 °C for 30 minutes to obtain hardened film, and the hardened film was visually observed for presence or absence of agglomerate attributable to the aggregates of the fine carbon fibrous structures existing in the film. As a result, substantially no agglomerate attributable to the aggregates of the fine carbon fibrous structures was observed.

### (Control 4)

Coating composition was prepared by blending the aggregates of fine carbon fibrous structures obtained in Control 1, to an epoxy resin (ADEKA RESIN EP4100E, epoxy equivalent: 190, manufactured by Asahi Denka Co., Ltd.) and a hardener (ADEKA HARDENER EH3636-AS, manufactured by Asahi Denka Co., Ltd.) so that the containing amount of the aggregates of fine carbon fibrous structures became 1% by weight based on the total weight of composition, and then kneading them for ten minutes.

The coating composition thus obtained was developed as a film using a doctor blade with gap of 200 µm. The coated film was then hardened at 170 °C for 30 minutes to obtain hardened film, and the hardened film was visually observed for presence or absence of agglomerate attributable to the aggregates of the fine carbon fibrous structures existing in the film. As a result, many agglomerates attributable to the aggregates of the fine carbon fibrous structures were observed.

## Claims

1. Method for manufacturing fine carbon fibers' aggregates having a circle-equivalent median diameter (hereinafter, it is expressed simply as "median diameter".) of not more than 30 µm, which comprises a pulverization step where a composition which comprises (a) fine carbon fibers' aggregates having a median diameter of not less than 30 µm and (b) a dispersion medium (liquid at 25°C) for the aggregates undergoes acceleration in order to forma turbulent flow and/or collision flow, thereby shearing force and/or impacting force exert on the (a) component included in the composition and thus the (a) component is pulverized, wherein the value of [I_{D}/I_{G} of fine carbon fibers' aggregates after pulverization of the (a) component] / [I_{D}/I_{G} of fine carbon fibers' aggregates before pulverization of the (a) component] (wherein the I_{D}/I_{G} is calculated from measurement values determined by Raman spectroscopic analysis using 514 nm light of the argon laser) is in the range of 0.7 to 1.5.

2. The method for manufacturing fine carbon fibers' aggregates according to Claim 1, wherein the method for exerting the shearing force and/or impacting force is a method which comprises penetrating the composition which comprises the (a) component and the (b) component through a gap between a rotating rotor and a fixed stator, and thereby exerting the shearing force and/or impacting force on the composition which comprises the (a) component and the (b) component.

3. The method for manufacturing fine carbon fibers' aggregates according to Claim 1, wherein the method for exerting the shearing force and/or impacting force is a method where flows, both of which are of the composition which comprises the (a) component and the (b) component, are made to collide with each other oppositely.

4. The method for manufacturing fine carbon fibers' aggregates according to one of Claims 1 - 3, wherein the (b) component is an alcohol having a carbon number of 1 - 5.

5. The method for manufacturing fine carbon fibers' aggregates according to one of Claims 1 - 4, wherein the (a) component is aggregates of carbon fibrous structures, each of carbon fibrous structures comprising a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers.

6. The method for manufacturing fine carbon fibers' aggregates according to one of Claims 1 - 5, wherein the (a) component has a bulk density of 0.0001 - 0.05g/cm³.

7. The method for manufacturing fine carbon fibers' aggregates according to one of Claims 1 - 6, wherein the (a) component has I_{D}/I_{G} ratio determined by Raman spectroscopy of not more than 0.2.

8. The method for manufacturing fine carbon fibers' aggregates according to one of Claims 1 - 7, wherein the (a) component has a oxidation temperature in air of not less than 750 °C.

9. The method for manufacturing fine carbon fibers' aggregates according to one of Claims 1 - 8, wherein the diameter of the granular part at a bonding site of carbon fibers in the carbon fibrous structure which constitutes the (a) component is larger than the outside diameter of the carbon fibers.

10. The method for manufacturing fine carbon fibers' aggregates according to one of Claims 1- 9, wherein the (a) component is produced using as carbon sources at least two carbon compounds which have mutually different decomposition temperatures.

11. The method for manufacturing fine carbon fibers' aggregates according to one of Claims 1 - 10, wherein the (a) component comprises fine carbon fibers' aggregates which are obtained by heating a mixture gas of catalyst and hydrocarbon at a temperature in the range of 800 °C-1300°C, and which are in the state before undergoing annealing at a temperature in the range of 2400 °C - 3000°C, and the aggregates having a median diameter of not less tan 30 µm.

12. The method for manufacturing fine carbon fibers' aggregates according to one of Claims 1 - 10, wherein the (a) component comprises fine carbon fibers' aggregates which are obtained by heating a mixture gas of catalyst and hydrocarbon at a temperature in the range of 800 °C-1300°C, and the aggregates further undergoing annealing at a temperature in the range of 2400 °C- 3000°C, and the aggregates having a median diameter of not less tan 30 µm.

13. The method for manufacturing fine carbon fibers' aggregates according to one of Claims 1 - 10, wherein the (a) component comprises fine carbon fibers' aggregates which are obtained by heating a mixture gas of catalyst and hydrocarbon at a temperature in the range of 800 °C - 1300°C in order to synthesis fine carbon fibers' aggregates, annealing the synthesized fine carbon fibers' aggregates at a temperature in the range of 2400 °C - 3000°C, and then subjecting the annealed fine carbon fibers' aggregates to air milling, and the aggregates having a median diameter of not less tan 30 µm.

14. The method for manufacturing fine carbon fibers' aggregates according to one of Claims 1 - 13, wherein the (a) component further comprises a dispersing agent.

15. Coating material which comprises fine carbon fibers' aggregates obtained by the manufacturing method as claimed in one of Claims 1-14, and an organic binder.
